# EUROPEAN PATENT APPLICATION

(11) **EP 2 599 897 A1**
(43) Date of publication of application: **05.06.2013**
(21) Application number: 11812670.5
(22) Date of filing: 14.03.2011
(51) Int. Cl.: C25D 7/00, B32B 37/00, B23K 20/02

(54) **PRODUCTION METHOD FOR A PLATE HEAT EXCHANGER**

(30) Priority: 30.07.2010 KR 20100073869
(71) Applicant: Donghwa Entec Co. Ltd., Busan 618-270 (KR)
(72) Inventor: HONG, Seonghui, Busan 618-270 (KR); KIM, Changsu, Busan 618-270 (KR); KIM, Hyeonjun, Busan 618-270 (KR); KIM, Ingon, Busan 618-270 (KR); LEE, Jaegeun, Busan 618-270 (KR); KANG, Jeongyun, Busan 618-270 (KR)
(74) Representative: Ferreccio, Rinaldo
(86) International application number: PCT/KR2011/001761
(87) International publication number: WO 2012/015139

(57) **Abstract**

Disclosed herein is a method of manufacturing a plate heat exchanger. The method of manufacturing a plate heat exchanger includes the steps of: electroplating a surface of a mold having a groove pattern formed on a surface thereof to form a plate; separating the plate from the mold; electroplating both sides of the separated plate with a brazing binder to form a plate unit; stacking the plate units such that grooves formed on the plate units intersect each other; and heating and pressing the stacked plate units to bind them each other.

## Description

### Technical Field

The present invention relates to a method of manufacturing a heat exchanger and, more particularly, to a method of manufacturing a plate heat exchanger, which can manufacture a very thin plate heat exchanger using electroforming.

### Background Art

A heat exchanger is an apparatus for transferring heat from high-temperature fluid to low-temperature fluid through a heating surface, and is variously used in all industrial fields.

However, heat exchangers used for automobiles, aircraft and the like are required to be compact because space for installing a heat exchanger is limited.

Therefore, plate heat exchangers of various types of heat exchangers are widely used.

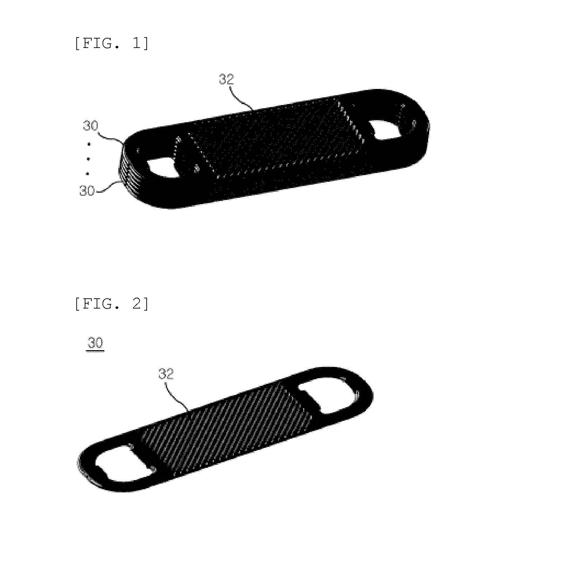

FIG. 1 is a perspective view showing a general plate heat exchanger, and FIG. 2 is a perspective view showing a plate unit constituting the plate heat exchanger shown in FIG. 1.

The plate heat exchanger shown in FIG. 1 is a small heat exchanger used for a gas turbine of an aircraft, and is manufactured by stacking the plate units 30 shown in FIG. 2, each including a plurality of grooves 32 formed on the surface thereof

The stacked plate units 30 can be connected with each other by a fastening means or can be joined with each other by a brazing method.

In this case, the grooves 32 formed on each of the plate units 30 are slantingly formed along one side thereof. At the time of stacking the plate units 30, the plate units 30 are stacked such that the grooves intersect each other, thus forming fluid passages. High-temperature fluid and low-temperature fluid alternately flow therethrough, and thus heat is exchanged by the plate units 30.

Such a plate is fabricated by a conventional press process.

However, in the case of a small heat exchanger used for a gas turbine of an aircraft, a plate having a thickness of about 0.1 mm is used, so there occurs a phenomenon in which a plate unit is torn when it is fabricated by a press process.

Moreover, since a plate unit is wrinkled in order to form a plurality of grooves and enlarge a heat transfer area, such a problem becomes more serious when it is fabricated by a press process.

### Disclosure

### Technical Problem

The present invention intends to provide a method of manufacturing a plate heat exchanger, wherein a mold is electroplated with a plate, the plate is separated from the mold, the separated plate is plated with a brazing binder to form plate units, and then the plate units are stacked and bound to manufacture a plate heat exchanger.

Further, the present invention intends to provide a method of manufacturing a plate heat exchanger, wherein a mold is sequentially plated with a brazing binder, a plate and a brazing binder to form plate units, the plate units are separated from the mold, and then the separated plate units are stacked and bound to manufacture a plate heat exchanger.

### Technical Solution

An aspect of the present invention provides a method of manufacturing a plate heat exchanger, including the steps of: electroplating a surface of a mold having a groove pattern formed on a surface thereof to form a plate; separating the plate from the mold; electroplating both sides of the separated plate with a brazing binder to form a plate unit; stacking the plate units such that grooves formed on the plate units intersect each other; and heating and pressing the stacked plate units to bind them each other.

Another aspect of the present invention provides a method of manufacturing a plate heat exchanger, including the steps of: electroplating a surface of a mold having a groove pattern formed on a surface thereof with a brazing binder; electroplating a surface of the brazing binder to form a plate; electroplating a surface of the plate with a brazing binder to form a plate unit; separating the plate unit from the mold; stacking the plate units such that grooves formed on the plate units intersect each other; and heating and pressing the stacked plate units to bind them each other.

### Advantageous Effects

According to embodiments of the present invention, a mold is plated with a plate unit by electroforming, and then the plate unit is separated from the mold, so a very thin plate heat exchanger can be easily and safely manufactured without damage occurring.

Further, since a mold can be semi-perpetually used, manufacturing cost and time can be greatly reduced.

### Description of Drawings

FIG. 1 is a perspective view showing a general plate heat exchanger.
FIG. 2 is a perspective view showing a plate unit constituting the plate heat exchanger shown in FIG. 1.
FIG. 3 is a flowchart showing a method of manufacturing a plate heat exchanger according to a first embodiment of the present invention.
FIG. 4 is a perspective view showing a mold used in the present invention.
FIG. 5 is a flowchart showing a method of manufacturing a plate heat exchanger according to a second embodiment of the present invention.

### Best Mode

Hereinafter, preferred embodiments of the present invention will be described in detail with reference to the accompanying drawings. The following embodiments are set forth to illustrate the present invention, and the technical scope of the present invention is not limited thereto. Further, in the description of the present invention, when it is determined that the detailed description of the related art would obscure the gist of the present invention, the description thereof will be omitted.

### <First embodiment>

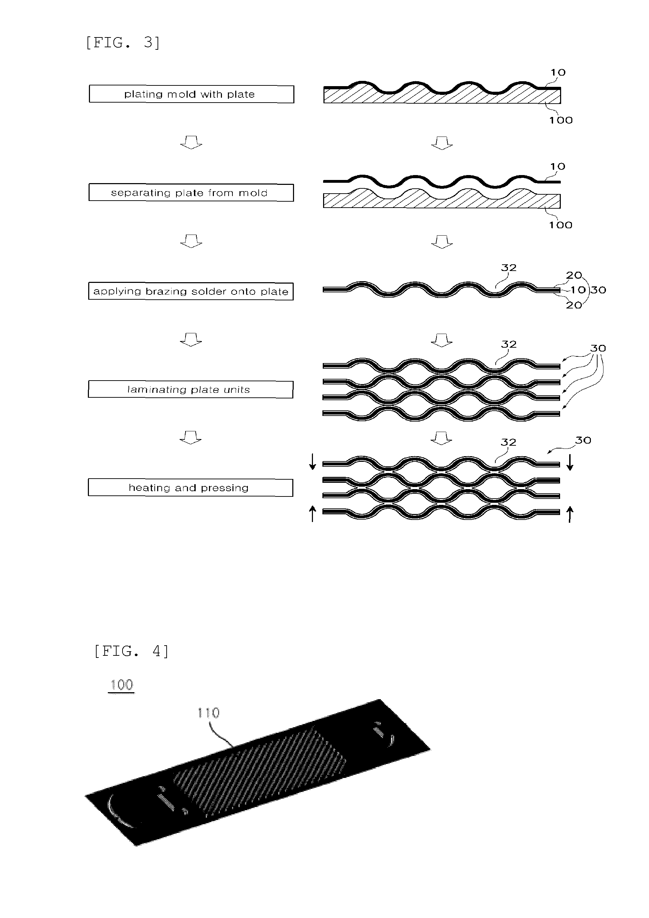

A first embodiment of the present invention will be described with reference to FIGS. 3 and 4. FIG. 3 is a flowchart showing a method of manufacturing a plate heat exchanger according to a first embodiment of the present invention, and FIG. 4 is a perspective view showing a mold used in the present invention.

In the first step, a mold 100 is plated with a plate 10.

As shown in FIG. 4, the mold 100 has a groove pattern 110 formed on the surface thereof. The groove pattern 110 serves to form grooves 32 on the following plate unit 30 and increase heat transfer efficiency, and is generally configured such that it is slanted along one side thereof while constituting a wave form.

The mold 100 may be fabricated by injection molding, and may be fabricated by other methods.

Further, the mold 100 may be made of a conductive material or may be coated with a conductive material in order to perform electroplating. For example, the mold 100 may be made of aluminum or copper.

This mold 100 is put into an electroplating bath, and is electroplated to plate the surface of the mold 100 with a plate 10.

The raw material of the plate 10 is not limited as long as it is a platable metal. In the present invention, the plate 10 may be made of nickel (Ni).

Of course, the thickness of the plate 10 may be controlled. In the present invention, the thickness thereof can be suitably selected by electrical control because a plate having a thickness of about 0.1 mm is used.

In the second step, the plate 10 is separated from the mold 100.

Since this step is performed by electroforming, the plate 10 is separated from the mold 100 after the mold is plated with the plate 10.

In this case, the plate 10 may be separated from the mold 100 by injecting air between the mold 100 and the plate 10. However, the separation of the plate 10 is not limited to this method.

In the third step, the plate 10 is plated with a brazing binder 20.

The plate 10 separated from the mold 100 is put into an electroplating bath to perform electroplating. In this case, both sides of the plate 10 are plated with a brazing binder 20 to form a plate unit 30 coated with the brazing binder 20.

The brazing binder 20 is a binding material used for brazing. In the present invention, a nickel-phosphorus (Ni-P) alloy may be used as the brazing binder 20. Further, a silver-copper (Ag-Cu) alloy may be used as the brazing binder 20.

In the fourth step, the plate units 30 are stacked.

The plurality of plate units 30, each of which is made by plating both sides thereof with the brazing binder 20, are stacked using a jig.

In this case, the plate units 30 are stacked such that the grooves 32 formed thereon intersect each other.

In other words, the plate units 30 are disposed such that the grooves 32 of any one plate unit 30 intersect the grooves 32 of another adjacent plate unit 30 to form flow passages. The concave portion of the groove of the upper plate unit 30 vertically comes into point contact with the convex portion of the groove of the lower plate unit 30.

Since the method of stacking the plate units 30 is commonly known, a detailed description thereof will be omitted.

In the fifth step, the stacked plate units 30 are heated and pressed.

In order to bind the plate units 30 stacked in the fourth step with each other, when the plate units 30 are heated to such a temperature at which the brazing binder 20 can be melted, and then pressed, the concave portion of the groove of the upper plate unit 30 is bound with the convex portion of the groove of the lower plate unit 30 by the molten brazing binder 20, thus obtaining a heat exchanger.

### <Second embodiment>

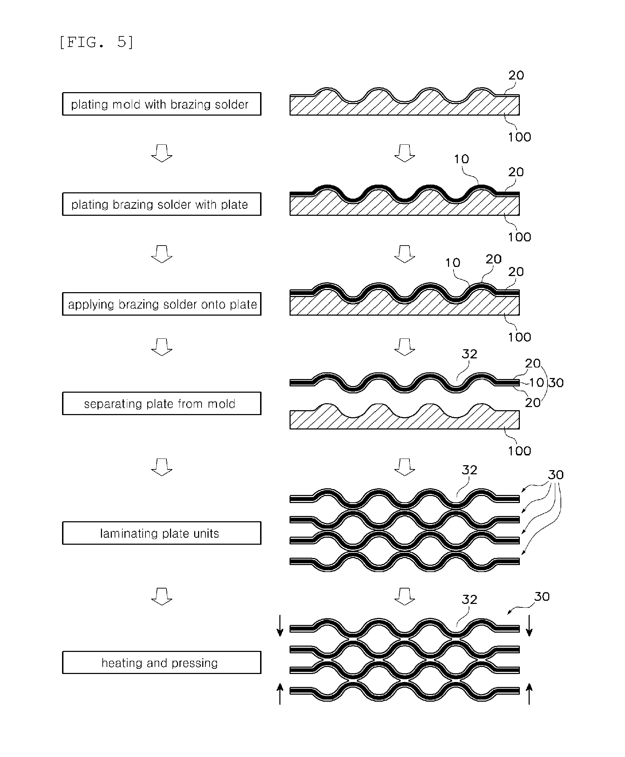

A second embodiment of the present invention will be described with reference to FIGS. 4 and 5. FIG. 5 is a flowchart showing a method of manufacturing a plate heat exchanger according to a second embodiment of the present invention

In the first step, a mold 100 is plated with a brazing binder 20.

As shown in FIG. 5, the mold 100 described in the first embodiment is first plated with the brazing binder 20. The raw material of the brazing binder 20 was aforementioned.

In the second step, the brazing binder 20 is plated with a plate 10.

The brazing binder 20 is not separated from the mold 100 in a state in which the mold 100 is plated with the brazing binder 20, and is electroplated on the surface thereof with the plate 10 again.

In the third step, the plate 10 is plated with a brazing binder 20.

That is, the surface of the plate 10 plated in the second step is electroplated with the brazing binder 20 to coat the plate 10.

As shown in FIG. 5, the mold 100 is sequentially plated with a brazing binder 20, a plate 10 and a brazing binder 20, and thus a plate unit 30 is formed on the mold 100.

In the fourth step, the plate unit 30 is separated from the mold 100.

As described above, the plate unit 30 may be separated from the mold 100 using air.

In the fifth step, the plate units 30 are stacked. In the sixth step, the stacked plate units 30 are heated and pressed.

The step of stacking the separated plate units 30 and the step of heating and pressing the stacked plate units 30 to bind them each other were afore-mentioned.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### - Reference Numerals -

10: plate
20: brazing binder
30: plate unit
32: groove
100: mold
110: groove pattern

### Industrial Applicability

The present invention can be used as a method of manufacturing a heat exchanger, and, more particularly, as a method of manufacturing a plate heat exchanger, which can manufacture a very thin plate heat exchanger using electroforming.

## Claims

1. A method of manufacturing a plate heat exchanger, comprising the steps of:
electroplating a surface of a mold having a groove pattern formed on a surface thereof to form a plate;
separating the plate from the mold;
electroplating both sides of the separated plate with a brazing binder to form a plate unit;
stacking the plate units such that grooves formed on the plate units intersect each other; and
heating and pressing the stacked plate units to bind them each other.

2. A method of manufacturing a plate heat exchanger, comprising the steps of:
electroplating a surface of a mold having a groove pattern formed on a surface thereof with a brazing binder;
electroplating a surface of the brazing binder to form a plate;
electroplating a surface of the plate with a brazing binder to form a plate unit;
separating the plate unit from the mold;
stacking the plate units such that grooves formed on the plate units intersect each other; and
heating and pressing the stacked plate units to bind them each other.
